(19) Europäisches Patentamt
European Patent Office
Office européen des brevets

(11) **EP 2 113 180 B1**

(12) **EUROPÄISCHE PATENTSCHRIFT**

(45) Veröffentlichungstag und Bekanntmachung des Hinweises auf die Patenterteilung:
**29.08.2012 Patentblatt 2012/35**

(51) Int Cl.:
*A47G 27/02* *(2006.01)*    *H02J 5/00* *(2006.01)*

(21) Anmeldenummer: **09007928.6**

(22) Anmeldetag: **27.10.2006**

(54) **Anordnung zur Versorgung eines Verbrauchers mit elektrischer Energie**

Assembly for supplying a consumer with electrical energy

Agencement d'alimentation d'un consommateur en énergie électrique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.10.2005 EP 05405611**

(43) Veröffentlichungstag der Anmeldung:
**04.11.2009 Patentblatt 2009/45**

(62) Dokumentnummer(n) der früheren Anmeldung(en) nach Art. 76 EPÜ:
**06804834.7 / 1 940 265**

(73) Patentinhaber:
• **Lantal Textiles**
**CH-4901 Langenthal (CH)**
• **Auckland Uniservices Limited**
**Auckland 1142 (NZ)**

(72) Erfinder:
• **Baumann, Urs**
**4912 Aarwangen (CH)**
• **Boys, John Talbot**
**Takapuna (NZ)**
• **Covic, Grant Anthony**
**Sandringham, Auckland (NZ)**

(74) Vertreter: **Rüfenacht, Philipp Michael et al**
**Keller & Partner**
**Patentanwälte AG**
**Schmiedenplatz 5**
**Postfach**
**3000 Bern 7 (CH)**

(56) Entgegenhaltungen:
WO-A-96/02970       GB-A- 541 169
JP-A- 6 231 871     JP-A- 8 035 147
JP-A- 8 144 153     JP-A- 10 005 104
JP-A- 54 111 693

**Beschreibung**

**Technisches Gebiet**

Die Erfindung betrifft einen textilen, gewobenen Teppich mit längslaufenden Kettfäden und querlaufenden Schussfäden, wobei drei oder mehr beabstandete, zueinander im Wesentlichen parallele Stromleiter entweder als Kettfäden oder als Schussfäden (5) eingewoben sind, wobei die Stromleiter während des Webvorgangs einen Teil einer Füllkette, einer Bindekette oder der Schussfäden ersetzen.

**Stand der Technik**

Verbraucher werden in der Regel mit Strom versorgt, indem ein Anschlusskabel an eine (Netz-)Steckdose angeschlossen wird. Dies schafft oft Probleme: So können Steckdosen nicht an sämtliche Orten vorgesehen werden, wo allenfalls einmal Strom benötigt wird; in der Raummitte, fern von Raumwänden ist die Anbringung von Steckdosen besonders schwierig - der Einbau in den Boden ist teuer und ästhetisch meist wenig befriedigend, zumal dann wenn die Steckdosen in Benutzung sind. Zur Versorgung von Verbrauchern sind aus diesen Gründen oft recht lange Anschlusskabel notwendig. Werden diese lose über den Boden verlegt, wird die Raumästhetik beeinträchtigt, die Kabel stellen zudem Hindernisse und Stolperfallen dar. Die Kabel können zwar gelegentlich unter einem Bodenbelag verlegt werden, wonach aber die Verbraucher (z. B. Ständerleuchten, Beleuchtungsmittel frei stehender Einrichtungselemente, Computer etc.) nicht mehr flexibel positioniert werden können.

Ein besonderes Problem stellt die Stromversorgung von beweglichen Verbrauchern (z. B. Fahrzeugen zum Lasten- und/oder Personentransport, selbstgesteuerten Staubsaugern etc.) mit Elektroantrieb dar. Es ist bekannt, solche Einheiten mit Akkumulatoren auszurüsten. Zum Aufladen derselben wird die Einheit periodisch zu einer Ladestation geladen, wo eine Kabel- oder Steckverbindung zwischen dem Fahrzeug und einer Ladebuchse bzw. Lade-Steckdose der Ladestation hergestellt wird. Diese Lösung bedingt aber, dass die Einheiten für den Ladevorgang stets zu einer Ladestation zurückkehren und während des Ladevorgangs nicht zur Verfügung stehen. Oft müssen zudem Kabel bereitgestellt oder mitgeführt werden, um das Fahrzeug mit der Ladestation zu verbinden.

Es ist bekannt, Stromverbraucher mittels Induktion an eine Versorgungsleitung zu koppeln. Die WO 96/02970 (Auckland Uniservices Limited) zeigt eine induktiv gespeiste Lampeneinheit mit einer Kopplungseinrichtung, die einen Resonanzkreis umfasst, mittels welchem Strom induktiv aus zwei parallelen langen geraden Kabeln aufgenommen werden kann. Die Lampeneinheit kann beispielsweise einen Strassenreflektor bilden, wobei die langen Kabel unterhalb des Strassenbelags in einem entsprechenden Spalt untergebracht werden können.

Die Verbraucher können aber nur entlang der eng begrenzten Kabel mit Strom versorgt werden. Es ist nicht möglich, ganze Flächen mit Möglichkeiten zur Stromversorgung zu versehen. Die Lösung ist zudem zwar für Strassen gut geeignet, nicht aber für Innenräume oder andere öffentliche Flächen.

Es wurde bereits vorgeschlagen, ein Stromversorgungssystem in einen Bodenbelag zu integrieren. So zeigt die JP 54 111 693 (Matsushita) ein Stromversorgungssystem für elektrische Geräte in Innenräumen. Dazu wird der Bodenbelag, insbesondere ein Teppich, zur Stromversorgung herangezogen. In den Randbereich des Teppichs eingebettet ist ein elektrisch isolierter, relativ flacher und flexibler Draht. An einem der Ecken des Teppichs ist der Draht mit einer Stromzuleitung verbunden. In den anderen Ecken des Teppichs sind Kopplungsmittel vorgesehen, an welchen Verbraucher angeschlossen werden können.

Diese Lösung ermöglicht aber ebenfalls nur eine Ankoppelung in bestimmten Bereichen des Bodenbelags. Letzterer ist somit abhängig vom späteren Einsatzort jeweils spezifisch auf Mass zu fertigen und ist in der Herstellung aufwendig.

Die JP 10 005104 A (Shimono Shikimono KK) betrifft einen antistatischen gewobenen Teppich. Dazu werden Flachsfasern mit leitenden Garnen und synthetischen Garnen verflochten, um ein Grundgarn zu bilden. Dieses Grundgarn wird dann als Schussfaden zur Herstellung eines Grundgewebes für einen Webteppich verwendet.

Diese Druckschrift zeigt einen Teppich, welcher grundsätzlich auf seiner gesamten Fläche mit leitenden Garnen versehen sein kann. Diese sind aber nicht zur Leitung von Strom ausgebildet, und der Teppich lässt sich auch nicht ohne weiteres dazu einsetzen.

**Darstellung der Erfindung**

Aufgabe der Erfindung ist es, einen dem eingangs genannten technischen Gebiet zugehörenden Teppich zu schaffen, welcher eine grossflächige Versorgung von Verbrauchern mit Strom ermöglicht und dauerhaft sowie kostengünstig herstellbar ist.

Die Lösung der Aufgabe ist durch die Merkmale des Anspruchs 1 definiert. Gemäss der Erfindung umfassen die Kettfäden Füllketten, Bindeketten und Polketten, wobei die Stromleiter als Füllketten eingewoben sind.

Die Füllketten lassen sich beim Webvorgang vergleichsweise einfach ganz oder teilweise durch flexible Stromleiter ersetzen, sie werden zudem beim Webvorgang und beim späteren Einsatz des Bodenbelags weniger beansprucht als die Bindekette oder gar die Polkette. Die Kettfäden der Füllkette sind zudem beim fertig gewobenen Bodenbelag im Wesentlichen gerade langgestreckt, was die direkte leitende Ankopplung im Bereich der Einspeisung (und gegebenenfalls im Bereich der Kopplungseinrichtung) vereinfacht und die induktive Ankopplung verbessert.

Vorzugsweise wird der Teppich in einer Anordnung zur Versorgung eines Verbrauchers mit elektrischer Energie einer Stromquelle eingesetzt, welche Folgendes umfasst:

a) einen textilen, gewobenen Bodenbelag (Teppich) mit längslaufenden Kettfäden und querlaufenden Schussfäden, wobei drei oder mehr beabstandete, zueinander im Wesentlichen parallele Stromleiter entweder als Kettfäden oder als Schussfäden eingewoben sind;

b) eine Einspeisung zum Anschluss der Stromleiter an die Stromquelle; und

c) eine Kopplungseinrichtung zur Aufnahme von elektrischer Energie aus den Stromleitern im Bodenbelag und zum Weitertransport an den Verbraucher, wenn die Kopplungseinrichtung in einen Stromaufnahmebereich des Bodenbelags gebracht wird.

Dies ermöglicht eine hohe Flexibilität bei der Stromversorgung, indem der zu versorgende Verbraucher weitgehend beliebig auf dem flächigen Bodenbelag positioniert werden kann, ohne dass Anpassungen an der Versorgungsanordnung (wie die Verlegung von Kabeln) notwendig sind. Der Bodenbelag nimmt seine üblichen Aufgaben weiterhin ohne Beeinträchtigung wahr, d. h. er ist uneingeschränkt begehbar, schafft ein angenehmes Raumklima und die gewünschte Ästhetik. Die Stromversorgung ist praktisch nicht sichtbar und stellt somit keine Beeinträchtigung der Raumgestaltung dar.

Die Anordnung ermöglicht zudem auf eine einfache Weise eine Stromversorgung im gesamten, mit dem Bodenbelag versehenen Raumbereich. Der Teppich wird nämlich wie üblich verlegt (z. B. verklebt oder eingespannt), zusätzlich muss lediglich die Einspeisung an die Stromquelle (z. B. einen üblichen Netzanschluss) angeschlossen werden. Der Verbraucher kann dann mittels der Kopplungseinrichtung mit elektrischer Energie versorgt werden, sobald letztere in den Stromaufnahmebereich des Bodenbelags gebracht wird. Der Stromaufnahmebereich ist beispielsweise ein Volumen oberhalb der gesamten Bodenbelagsfläche bis zu einem gewissen Maximalabstand vom Boden. Im einfachsten Fall wird die Kopplungseinrichtung einfach auf den Boden gestellt und stellt dann einen Kontakt mit den Stromleitern her.

Die Kopplungseinrichtung kann in dasselbe Gehäuse wie der Verbraucher eingebaut sein (z. B. in den Sockel einer Ständerleuchte) oder es kann eine gesonderte Kopplungseinheit eingesetzt werden, welche die aufgenommene Energie derart umformt, dass übliche Verbraucher ohne weiteres an die Kopplungseinheit angeschlossen werden können. Die Kopplungseinheit kann beispielsweise eine Steckdose aufweisen, an welcher die übliche Netzspannung (230 V 50 Hz) bereitgestellt wird.

Weil die Stromleiter einen Teil des Teppichgewebes bilden, lassen sie sich direkt beim Weben des Teppichs einarbeiten. Somit entfallen zusätzliche Verfahrensschritte bei der Herstellung, und der Teppich entspricht in seinen wesentlichen Eigenschaften als Bodenbelag seinem Pendant ohne Stromleiter. Die Stromleiter sind zudem fest in das Gewebe integriert und somit weitgehend vor äusseren Einflüssen geschützt.

Bevorzugt ist die Kopplungseinrichtung derart ausgebildet, dass elektrische Energie induktiv aus den Stromleitern aufgenommen werden kann. So erübrigt sich ein direkter (leitender) Kontakt zwischen der Kopplungseinrichtung und den Stromleitern und die Stromübertragung ist auch dann möglich, wenn die leitenden Elemente des Bodenbelags nicht unmittelbar von dessen Oberfläche her kontaktierbar sind. Die Energieübertragung wird beispielsweise ermöglicht, indem die Kopplungseinheit lediglich an beliebiger Stelle auf den erfindungsgemässen Bodenbelag gestellt wird. Dass eine für die meisten Anwendungen ausreichende induktive Energieübertragung bei der Versorgung mittels parallelen Leitern technisch möglich ist, ist beispielsweise in der bereits oben erwähnten WO 96/02970 (Auckland Uniservices Limited) dargelegt.

Die drei oder mehr in den Bodenbelag eingewobenen Stromleiter bilden mit Vorteil eine erste Gruppe, über welche elektrische Energie in eine erste Richtung übertragen wird, sowie eine zweite Gruppe, über welche elektrische Energie in eine zur ersten Richtung entgegengesetzte zweite Richtung übertragen wird, wobei jede Gruppe ein magnetisches Feld erzeugt, welches den Stromaufnahmebereich des Bodenbelags bestimmt. Die magnetischen Felder können zur induktiven Übertragung von elektrischer Energie ausgenutzt werden. Weil die Induktivität der Stromleiter unter anderem von deren Länge abhängt, darf diese einen gewissen Wert nicht überschreiten, wenn elektrische Energie effizient induktiv übertragen werden soll.

Die erste und die zweite Gruppe umfassen jeweils bevorzugt zwei oder mehrere Stromleiter. Dadurch lassen sich der nutzbare magnetische Fluss und damit die übertragbare elektrische Leistung pro Gruppe auch bei geringem Leiterdurchmesser erhöhen.

Die Einspeisung kann derart ausgebildet sein, dass nach Anschluss der Stromleiter an die Stromquelle im Bereich der angeschlossenen Stromleiter eine weiträumige magnetische Feldverteilung erzeugt wird, so dass in diesem Bereich unabhängig von einer Position der Kopplungseinrichtung im Wesentlichen überall eine für den Verbraucher minimal benötigte elektrische Leistung aufnehmbar ist. Der Verbraucher bzw. die Kopplungsvorrichtung können somit an einer beliebigen Stelle in dem mit Strom versorgten Bereich positioniert werden oder gar während einer Bewegung über den Bereich kontinuierlich elektrische Energie aufnehmen. Eine präzise Positionierung der Kopplungseinrichtung ist nicht erforderlich, und für den Einsatz des Verbrauchers wird maximale Flexibilität gewonnen.

Vorzugsweise sind jeweils mehrere Stromleiter einer Gruppe elektrisch parallel verbunden. Mit einer derartigen Anordnung ist es möglich, im Wesentlichen im gesamten mit angeschlossenen Stromleitern versehenen Bereich eine Möglichkeit zur induktiven Stromübertragung zu schaffen.

Die Aufteilung der parallelen Stromleiter in mehrere nebeneinander liegende Gruppen mit jeweils einer gewissen Anzahl Stromleiter, in welchen der Strom in dieselbe Richtung fliesst, ist vorteilhaft im Hinblick auf eine möglichst grosse übertragbare Leistung. Am einfachsten zu realisieren ist dabei eine Konfiguration, bei welcher der Strom in benachbarten Gruppen in jeweils entgegengesetzter Richtung fliesst. So können die Gruppen der Stromleiter nämlich im Wesentlichen U- bzw. W-förmig angeordnet und miteinander elektrisch verbunden werden. Der Bodenbelag kann auf einer Längsseite kontaktiert werden.

Allerdings haben magnetische Effekte einen starken Einfluss auf die Stromstärken in den einzelnen Stromleitern. Die Stromstärke ist stark abhängig davon, ob sich ein Leiter in der Mitte einer Gruppe befindet oder an deren Rand, in der Nachbarschaft der nächsten Gruppe, in welcher der Strom in entgegengesetzter Richtung fliesst. Um den Einfluss dieser Effekte zu mindern, sind mit Vorteil Stromleiter benachbarter Gruppen einzeln miteinander verbunden, und eine Reihenfolge der Stromleiter zwischen den benachbarten Gruppen ist derart vertauscht, dass ein Abstand mindestens eines der Stromleiter von einem nächstliegenden äussersten Stromleiter der jeweiligen Gruppe zwischen einer ersten der benachbarten Gruppen und einer zweiten der benachbarten Gruppen unterschiedlich ist. Die Vertauschung wird bevorzugt im Randbereich des Bodenbelags, bei der Verbindung der eingewobenen Einzelleiter benachbarter Gruppen vorgenommen.

Weil die Stromleiter einmal am Rand und einmal weiter innen in der jeweiligen Gruppe verlaufen, mitteln sich die ortsabhängigen Effekte aus und es kann eine wesentlich gleichförmigere Verteilung der Stromstärken erreicht werden. Durch eine geschickte Verteilung der Stromleiter auf verschiedene Positionen innerhalb der aufeinander folgenden Gruppen lässt sich die Homogenität nach Bedarf optimieren.

Wenn lokalisierte Maxima erzeugt werden sollen, ist die Einspeisung mit Vorteil derart ausgebildet und angeordnet, dass die drei oder mehr Stromleiter eine erste Gruppe bilden, über welche elektrische Energie in eine erste Richtung übertragen wird sowie eine zweite Gruppe, über welche elektrische Energie in eine zur ersten Richtung entgegengesetzte zweite Richtung übertragen wird, wobei benachbarte Stromleiter jeweils abwechselnd der ersten und der zweiten Gruppe angehören. Stromrichtungen in benachbarten parallelen Stromleitern sind somit jeweils entgegengesetzt. Aufgrund der entgegengesetzten Stromrichtungen benachbarter Leiter heben sich die erzeugten magnetischen Felder bereits in geringer Entfernung im Wesentlichen auf und oberhalb des Teppichs wird nur ein sehr geringes magnetisches Feld erzeugt. Es können einfache Leitertopologien eingesetzt werden, welche nur einseitig kontaktiert werden müssen. An der einen Kante des Bodenbelags, an welcher die Stromleiter münden, sind beispielsweise jeweils zwei benachbarte Leiter miteinander leitend verbunden, während an der gegenüberliegenden Kante die Einspeisung erfolgt.

Je nach Anwendungszweck kann die Einspeisung auch derart ausgebildet sein, dass nach Anschluss der Stromleiter an die Stromquelle im Bereich der angeschlossenen Stromleiter eine magnetische Feldverteilung mit mindestens einem lokalisierten Maximum erzeugt wird, während in den restlichen Regionen dieses Bereichs das magnetische Feld gering ist. Diese Variante ist dann von Vorteil, wenn die elektrische Energie an einer vorgegebenen Stelle benötigt wird und im restlichen Bereich möglichst geringe magnetische Felder aufgebaut werden sollen. Wird beispielsweise die erfindungsgemässe Anordnung zur Versorgung von fest positionierten Lichtquellen oder anderen Verbrauchern in einem Flugzeuginnenraum eingesetzt, so ist es wünschenswert, wenn in Bereichen des Innenraums, in welchen keine elektrische Energie zu beziehen ist, die Stärke der magnetischen Felder möglichst begrenzt werden kann. Ansonsten besteht die Gefahr, dass in metallischen Objekten (z. B. in am Boden deponierten Artikeln etc.) Wirbelströme induziert werden, welche zur Erwärmung dieser Objekte führen können. Im Weiteren bestehen gegenüber weiträumig verteilten Magnetfeldern auch gesundheitliche Bedenken.

Um die lokalen Maxima zu erzeugen, ist der Bodenbelag beim lokalisierten Maximum der magnetischen Feldverteilung vorzugsweise mit einem Element aus ferromagnetischem Material versehen. Dieses Element ist beispielsweise balkenartig ausgebildet.

Um das magnetische Feld zu erzeugen, werden zudem die parallelen Stromleiter im Bereich eines Elements auf eine besondere Art und Weise geführt. So ist das Element insbesondere zwischen die Stromleiter eingewoben und erstreckt sich (mit seiner Hauptausdehnung) in Querrichtung über mehrere benachbarte Stromleiter.

Das Element kann beispielsweise so angeordnet sein, dass sämtliche Leiter einer ersten Stromrichtung unterhalb des Elements verlaufen, während sämtliche Leiter einer zweiten, entgegengesetzten Stromrichtung oberhalb des Elements verlaufen (vertikale Separation). Alternativ ist es möglich, die Leiter im Bereich eines Elements nach Stromrichtung in Querrichtung zu separieren und in den endseitigen Bereichen des Elements zu führen (horizontale Separation).

Mit Vorteil sind mehrere beabstandete Elemente aus ferromagnetischem Material am Bodenbelag angeordnet, und es werden mehrere lokalisierte Maxima erzeugt. Dies ermöglicht die Aufnahme von elektrischer Energie an unterschiedlichen Stellen des Bodenbelags. Trotzdem kann das magnetische Feld in den restlichen Regionen gering gehalten werden.

Um das magnetische Feld zu verstärken, kann mindestens ein Stromleiter mindestens eine Schleife oder Wicklung um das ferromagnetische Element bilden.

Je nach Anwendungszweck und gewünschter Feldverteilung kann die Topologie der Stromleiter auf vielerlei Weise variiert werden, so können sämtliche Stromleiter des Bodenbelags in Serie geschaltet sein und somit einen einzelnen Stromkreis bilden oder es sind mehrere parallele und gegebenenfalls einzeln schaltbare Stromkreise vorgesehen. Dadurch wird eine individuelle Steuerung der Verbraucher ermöglicht und eine verbesserte Absicherung bei Störungen erreicht.

Die induktive Kopplungseinrichtung umfasst mit Vorteil mindestens eine Windung zur induktiven Kopplung mit den Stromleitern, bevorzugt ist mindestens eine Spule mit einer Vielzahl von Windungen vorgesehen. Die Windung bzw. Spule wird bezüglich der Stromleiter so positioniert, dass sie von dem vom (primären) Strom in den Stromleitern erzeugten magnetischen Fluss durchflossen und so in der Windung bzw. Spule ein (sekundärer) Strom induziert wird. Damit eine möglichst verlustarme Energieübertragung möglich ist, handelt es sich beim primären Strom mit Vorteil um einen Wechselstrom mit einer Frequenz von 200 Hz bis 2 MHz, bevorzugt ca. 10 - 50 kHz, die Windung der Kopplungseinrichtung ist zudem bevorzugt Teil eines Schwingkreises, dessen Resonanzfrequenz mit der Frequenz des Primärstroms übereinstimmt. Die Stromstärke im Stromleiter beträgt typischerweise 1 - 25 A, die Spannung 10 - 80 V. Zur Verbesserung der induktiven Übertragung kann in der Kopplungseinrichtung eine Spule mit Ferritkern eingesetzt werden.

Damit unabhängig von der genauen Positionierung der Kopplungseinrichtung auf dem Bodenbelag eine Energieübertragung möglich ist, umfasst die Kopplungseinrichtung mit Vorteil mehrere räumlich verteilte Windungen, welche nach Bedarf zusammenschaltbar sind. Die mittels einer Windung (oder eine Spule mit mehreren übereinander liegenden Windungen) aufnehmbare Energie hängt von der relativen Position der Windung zu den Stromleitern ab. In gewissen Positionen lässt sich keine oder nur eine geringe Energie übertragen, weil sich der von den beteiligten Stromleitern erzeugte magnetische Fluss innerhalb die Windungen (annähernd) zu Null aufhebt. Sind mehrere, geeignet räumlich verteilte Windungen vorgesehen, so wird stets in mindestens einer der Windungen ein Strom induziert. Die Kopplungseinrichtung weist nun eine Steuereinheit auf, welche die verschiedenen Windungen (oder die verschiedenen Spulen) geeignet zusammenschaltet, so dass ein maximaler Strom zur Verfügung steht. Beispielsweise wird der in jeder Windung (oder Spule) erzeugte Strom einzeln gemessen, und anschliessend werden alle Windungen (bzw. Spulen) mit Strömen einer ersten Richtung parallel geschaltet, während die restlichen Windungen (bzw. Spulen) mit Strömen der entgegengesetzten Richtung antiparallel dazu geschaltet werden. Je nach den eingesetzten Primärströmen und -spannungen und den gewünschten Sekundärströmen und Spannungen kann auch eine Serieschaltung gewählt werden.

Bei einer einfacheren Lösung ist nur eine einzelne Windung bzw. Spule vorhanden und die Kopplungseinrichtung wird passend zu den Stromleitern im Bodenbelag ausgerichtet. Dazu können an der Kopplungseinrichtung sowie am Bodenbelag einander entsprechende Markierungen vorgesehen sein, oder die Kopplungseinrichtung weist eine Anzeigevorrichtung für die korrekte Ausrichtung auf, z. B. eine LED-Lampe, welche bei korrekter Positionierung aufleuchtet.

Damit die an die Kopplungseinrichtung angeschlossene oder diese enthaltende Verbraucher geeignet mit Strom versorgt werden können, umfasst die Kopplungseinrichtung weitere Komponenten (z. B. Transformatoren, Schalter, Gleich- und/oder Wechselrichter, DSPs etc.) zur Stromregelung, um die erhaltenen Sekundärströme in einen gewünschten Nutzstrom zu transformieren. Entsprechende Komponenten und Schaltkreise sind aus dem Stand der Technik an sich bekannt.

Anstelle einer induktiven Aufnahme des Stroms aus den Stromleitern kommt auch ein direkter, leitender Kontakt in Frage. Die Kopplungseinrichtung umfasst dazu insbesondere Kontaktklemmen, insbesondere Schneidklemmen, um elektrische Energie aus den Stromleitern aufzunehmen. Die Klemmen können auch z. B. als dünne, nadelartige Elemente ausgebildet sein, welche den Teppichflor durchdringen und die Stromleiter kontaktieren. Durch die dünnen nadelartigen Elemente wird der Flor des Teppichs nicht beschädigt.

Damit die Stromleiter unabhängig von der Positionierung der Kopplungseinrichtung stets von den Kontaktklemmen kontaktiert werden, kann eine Matrix solcher Elemente vorgesehen sein, deren Grösse und Geometrie an die Dimensionen und die Abstände der Stromleiter angepasst sind. Nur für die Übertragung geringer Leistungen kommen schliesslich eine kapazitive Anbindung des Verbrauchers oder die Übertragung der Energie durch das elektromagnetische Feld, bei welcher die Stromleiter gleichsam Antennen bilden, in Frage.

Die Kontaktierung der Stromleiter zur Versorgung mit Energie aus der Stromquelle erfolgt mit Vorteil durch Flachkontakte, welche am Rand des Bodenbelags angeordnet sind und eine leitende Verbindung zu den Stromleitern aufweisen. Die Flachkontakte können beispielsweise an der Bodenbelagsunterseite befestigt sein und die Stromleiter von unten her kontaktieren, oder sie erstrecken sich zumindest teilweise in den Bereich seitlich des Bodenbelags und kontaktieren die Stromleiter von der Seite her, d. h. in der Ebene der Stromleiter. Die einzelnen Kontakte können mit an sich bekannten Flachkabeln miteinander verbunden werden und in einer Anschlussklemme münden, an welcher ein übliches Kabel zur Stromzuführung angeschlossen werden kann.

Die Kontaktierung des Bodenbelags kann an einer einzigen Seite erfolgen, wobei an der in Richtung der Stromleiter gegenüberliegenden Seite die Stromleiter miteinander verbunden sind, um geschlossene Stromkreise zu bilden, oder die Kontaktierung erfolgt beidseitig. Die Verbindung der Stromleiter auf der Gegenseite kann bereits bei der Fertigung des Bodenbelags hergestellt werden, oder es wird ein zusätzliches Verbindungselement eingesetzt, welches beispielsweise wiederum auf der Unterseite des Bodenbelags befestigt werden kann.

Mit Vorteil weist jeder Stromleiter eine umhüllende Isolationsschicht auf, z. B. eine isolierende Lack- oder Kunststoffschicht oder eine Umhüllung. Diese verhindert, dass die Leiter von der Oberfläche des Bodenbelags her irrtümlich kontaktiert werden und vermeidet Kurzschlüsse bei feuchtem oder durchnässtem Bodenbelag. Um die Leiter direkt leitend zu kontaktieren, wird die Isolationsschicht in einem entsprechenden Bereich teilweise entfernt (z. B. bei der Einspeisung), oder sie wird durchstochen (z. B. bei der Kontaktierung mittels eines nadelartigen Elements). Auf die induktive Kontaktierung hat die Isolationsschicht keinen wesentlichen nachteiligen Einfluss.

Die Isolationsschicht kann zusätzlich derart ausgebildet sein, dass sie im Rahmen des Webprozesses den von ihr umgebenen Leiter vor Beschädigungen schützt. Geeignete Materialien zu diesem Zweck sind PTFE (Teflon) oder Kunststoffe wie Polypropylen, Polycarbonat oder Polyester.

Alternativ, z. B. wenn der Teppichflor sehr hoch und/oder dicht ist und nicht mit einer Durchnässung des Bodenbelags gerechnet werden muss, kann auf die Isolierung verzichtet werden.

Die Stromleiter sind vorzugsweise als metallische Litzen, insbesondere Kupferlitzen, ausgebildet, d. h. sie bestehen aus einer Mehrzahl dünner Einzeldrähte. Litzen, insbesondere Kupferlitzen, weisen eine gute Leitfähigkeit auf, sind dauerhaft und sehr biegsam, lassen sich damit leicht im Webprozess verarbeiten und schränken die Verformbarkeit des Bodenbelags nicht zusätzlich ein.

Anstelle von Litzen können auch übliche Drähte eingesetzt werden, deren Biegsamkeit dem Webprozess und der gewünschten Verformbarkeit des Bodenbelags angepasst ist.

Der Abstand zweier benachbarter Stromleiter beträgt jeweils mit Vorteil 0.5 - 2 cm. Dadurch lässt sich auch bei kompakten Kopplungseinrichtungen eine ausreichende Energieübertragung sicherstellen. Benachbarte Drähte sind zudem ausreichend weit voneinander entfernt, dass nachteilige gegenseitige elektrische Beeinflussungen vermieden werden können.

Eine Anordnung zur Stromversorgung mit einem erfindungsgemässen Teppich hat einen breiten Anwendungsbereich. So können Einrichtungen wie Ständerleuchten, Stromversorgungen und Beleuchtungsmittel frei stehender Einrichtungselemente, Computer, Anzeigepanels etc. auf einfache Weise mit Strom versorgt werden. Die Anordnung ist besonders auch in Messehallen einsetzbar, wo die Einrichtung regelmässig umgebaut wird und somit Stromverbraucher an unterschiedlichen Stellen positioniert werden müssen. Ein weiterer Einsatzbereich ergibt sich im Transportwesen, wo die erfindungsgemässe Anordnung z. B. im Innenraum von Flugzeugen, Eisenbahnwagen, Bussen oder Schiffen eingesetzt werden kann. Mittels des erfindungsgemässen Bodenbelags wird es auf einfache Weise ermöglicht, Verbraucher an verschiedenen Orten des Innenraums mit Strom zu versorgen.

Eine spezifische Anwendung für die Anordnung mit lokal erzeugten Feldmaxima ist beispielsweise die Versorgung von Vorrichtungen zum Aufpumpen von Luftkissen von Flugzeugsitzen (siehe WO 2004/009399 und WO 2004/009400, Prospective Concepts).

Ein in einer Anordnung mit einem erfindungsgemässen Teppich einsetzbares Leuchtelement umfasst beispielsweise

a) eine Kopplungseinrichtung zur Aufnahme von elektrischer Energie aus den Stromleitern im Bodenbelag, wenn die Kopplungseinrichtung in einen Stromaufnahmebereich des Bodenbelags gebracht wird;

b) eine mit der Kopplungseinrichtung elektrisch verbundene elektronische Wandlereinheit zum Erzeugen eines Nutzstroms aus der aufgenommenen elektrischen Energie;

c) eine mit der Wandlereinheit elektrisch verbundene Lichtquelle, insbesondere eine LED.

Diese Leuchtelemente können beispielsweise in vorgefertigte Aufnahmen im Bodenbelag eingesetzt werden, in welchen die stromführenden Leiter im Wesentlichen direkt zugänglich sind und welche Platz zur Aufnahme eines Gehäuses des Leuchtelements bieten, so dass die Leuchtelemente nicht oder nur geringfügig über die Oberfläche des Bodenbelags heraustreten. Nicht benutzte Aufnahmen werden durch eine Abdeckung, z. B. aus Teppichmaterial, Leder oder Kunststoff, verschlossen. Die Aufnahmen können bereits im Rahmen der Teppichherstellung gefertigt werden, indem in den entsprechenden Bereichen kein Polmaterial verarbeitet wird. Alternativ wird der Hauptteil des Leuchtelements unterhalb des Teppichs angebracht, und nach dem Webvorgang werden Löcher in das Material eingebracht, z. B. durch Stanzen, durch welche die Lichtquelle an die Teppichvorderseite hindurchtreten kann.

Die Anordnung ist ebenfalls geeignet für die Stromversorgung beweglicher Verbraucher (z. B. von Fahrzeugen oder selbstgesteuerten Geräten wie Staubsaugern), welche sich auf dem textilen Bodenbelag bewegen. So kann ein Akkumulator eines solchen beweglichen Verbrauchers mit Strom aufgeladen werden, welcher von den Stromleitern durch die Kopplungseinrichtung induktiv aufgenommen und weiter zur Ladevorrichtung transportiert wird. Der Ladevorgang kann immer dann erfolgen, wenn das Fahrzeug stillsteht, unabhängig von dessen Position. Bei geeigneter Auslegung der Kopplungseinrichtung kann das Aufladen auch während dessen Fahrt erfolgen oder der Antrieb des beweglichen Verbrauchers wird direkt (induktiv) vom Bodenbelag gespeist. Eine spezifische Anwendung der erfindungsgemässen Anordnung ist die Stromversorgung von elektrisch angetriebenen Fahrzeugen zum Personen- oder Warentransport, wie sie in grossräumigen Gebäuden (z. B. Flughäfen) mit textilem Bodenbelag eingesetzt werden. Weil die Fahrzeuge nicht periodisch zur Ladestation zurück gefahren werden müssen, sondern sämtliche Stillstandszeiten zum Laden der Akkumulatoren genutzt werden können, wird die Verfügbarkeit der Fahrzeuge stark erhöht. Die anfallenden Transporte können somit mit einer geringeren Anzahl von Fahrzeugen ausgeführt werden.

Die im erfindungsgemässen Bodenbelag integrierten Stromleiter lassen sich bei geeigneter Dimensionierung und entsprechend gewählten Strömen auch zur Beheizung des Bodens einsetzen. Sie können ausserdem auch (oder ausschliesslich) für die Datenübertragung genutzt werden, insbesondere können die angeschlossenen Verbraucher mittels Dateninformationen gesteuert werden, welche dem Nutzstrom überlagert sind. Anstelle einer Überlagerung können die Daten in gesonderten, im Bodenbelag integrierten Leitungen übertragen werden.

Aus der nachfolgenden Detailbeschreibung und der Gesamtheit der Patentansprüche ergeben sich weitere vorteilhafte Ausführungsformen und Merkmalskombinationen der Erfindung.

## Kurze Beschreibung der Zeichnungen

Die zur Erläuterung des Ausführungsbeispiels verwendeten Zeichnungen zeigen:

Fig. 1 A, B     Schematische Darstellungen zweier Realisierungen eines erfindungsgemässen Bodenbelags;

Fig. 1C-E     schematische Darstellungen weiterer, nicht erfindungsgemässer Bodenbeläge;

Fig. 2A, B     schematische Darstellungen verschiedener erfindungsgemässer Anordnungen zur Stromversorgung mit einer ersten Leitertopologie;

Fig. 3     ein vertikaler Querschnitt durch einen erfindungsgemässen Bodenbelag und eine erfindungsgemässe Kopplungseinrichtung;

Fig. 4     ein Blockschema einer erfindungsgemässen Kopplungseinrichtung;

Fig. 5A     eine schematische Darstellung einer zweiten Leitertopologie einer erfindungsgemässen Anordnung;

Fig. 5B     die resultierende Stromverteilung der zweiten Leitertopologie;

Fig. 6A     eine schematische Darstellung einer dritten Leitertopologie einer erfindungsgemässen Anordnung;

Fig. 6B     die resultierende räumliche Stromverteilung der dritten Leitertopologie;

Fig. 7     die räumliche Verteilung der auskoppelbaren Leistung in einer Anordnung mit der dritten Leitertopologie;

Fig. 8     eine schematische Darstellung einer Anordnung mit einer Leitertopologie mit lokalisierten Auskopplungsstellen;

Fig. 9     ein ferromagnetisches Element zur lokalen Auskopplung von elektrischer Energie aus dieser Anordnung;

Fig. 10A, B     eine erste Leiterkonfiguration an einer lokalen Auskopplungsstelle in einer Draufsicht und einem vertikalen Querschnitt;

Fig. 11A, B     eine zweite Leiterkonfiguration an einer lokalen Auskopplungsstelle in einer Draufsicht und einem vertikalen Querschnitt;

Fig. 12     eine Draufsicht auf eine dritte Leiterkonfiguration an einer lokalen Auskopplungsstelle;

Fig. 13     die räumliche Verteilung der in einer Messsonde erzeugten elektromotorischen Kraft im Bereich einer lokalen Auskopplungsstelle; und

Fig. 14A, B     eine weitere Ausführungsform einer erfindungsgemässen Anordnung mit einer Reihe von in den Bodenbelag einsetzbaren Leuchtelementen.

Grundsätzlich sind in den Figuren gleiche Teile mit gleichen Bezugszeichen versehen.

## Wege zur Ausführung der Erfindung

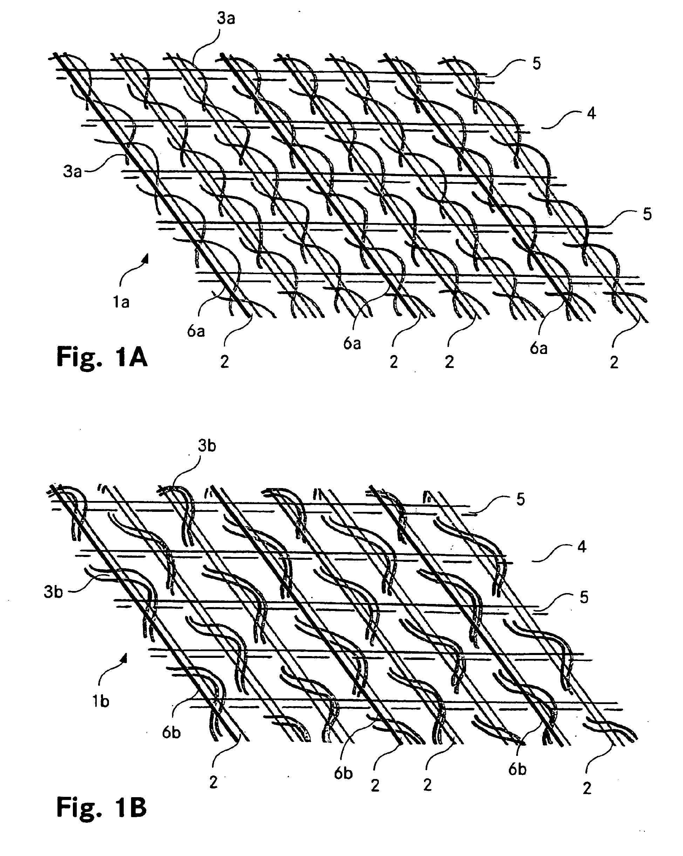

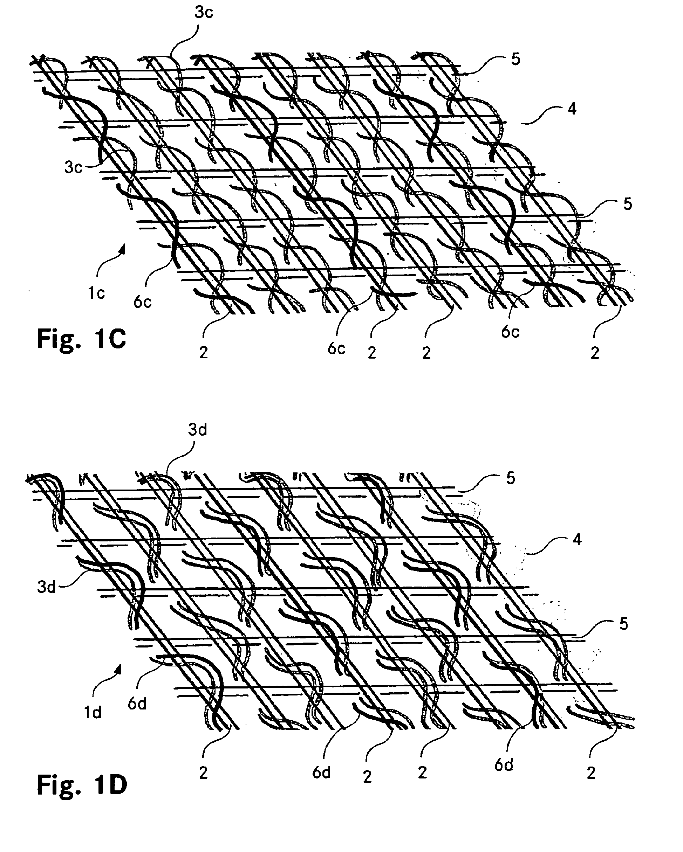

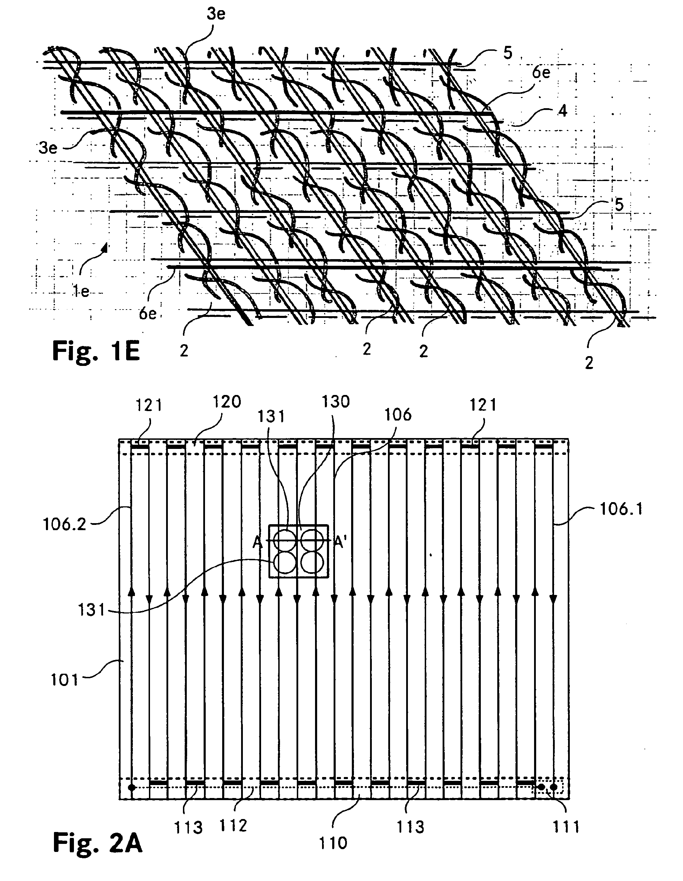

Die Figuren 1A-E sind schematische Darstellungen verschiedener Realisierungen textiler gewobener Bodenbeläge 1a...1e. Der Bodenbelag 1 (Teppich) umfasst jeweils ein (längs laufendes) Kettsystem mit Füllkette 2, Bindekette 3a...3e und Polkette 4 sowie ein (quer laufendes) Schusssystem mit dem Schuss 5. Die Stromleiter 6a...6e sind in das Gewebe integriert. Der Aufbau der dargestellten Ausführungsbeispiele ist wie folgt:

| Figur | Abbindung (Verlauf der Bindekette) | leitendes Material (Kupferlitze) | Abstand zwischen Stromleitern |
|-------|-------------------------------------|-----------------------------------|--------------------------------|
| 1A | 1:1 | Füllkette | 3 Ketten |
| 1B | 2:2 | Füllkette | 3 Ketten |
| 1C | 1:1 | Bindekette | 3 Ketten |
| 1D | 2:2 | Bindekette | 3 Ketten |
| 1E | 1:1 | Schuss | 3 Schüsse |

Die Stromleiter 6 lassen sich somit als Teil der Füllkette 2, der Bindekette 3 oder des Schusses 5 während des Webvorgangs in den textilen Bodenbelag 1 einarbeiten. Dazu werden die entsprechenden Kett- oder Schussfäden durch isolierte Kupferlitzen als Stromleiter 6 ersetzt. Die Anzahl Kettfäden beträgt beispielsweise 320/m, bei den dargestellten Ausführungsbeispielen ist der Abstand zwischen benachbarten parallelen Stromleitern 6 somit ungefähr 1 cm.

Wenn die Stromleiter 6 Teil des Kettsystems sind, kann das leitende Material in den Ketten während des Webvorgangs entweder auf dem jeweiligen Kettbaum mit den anderen Füll- bzw. Bindeketten eingebracht oder separat aufgesteckt werden.

Besonders von Vorteil sind die erfindungsgemässen Ausführungsformen gemäss Figuren 1A, 1B, bei welchen das leitende Material einen Teil der Füllkette 2 bildet. Diese lässt sich im Rahmen des Webvorgangs besonders einfach in das Gewebe einarbeiten, und ist beim fertig gewobenen Teppich im Wesentlichen gerade gestreckt, was die mechanische Beanspruchung der Stromleiter minimiert und optimale elektrische Eigenschaften ermöglicht.

Der Querschnitt der Kupferlitze sowie der Abstand zwischen den eingewobenen Stromleitern können den Parametern des Teppichs (Querschnitt der verwobenen Fäden, Fadendichte etc.) sowie der zu transportierenden Energiemenge angepasst werden. Anstelle von Kupfer können auch Litzen aus einem anderen Material bzw. aus biegsamen Drähten verwendet werden.

Die Erfindung ist nicht auf die aufgeführten, beispielhaften Realisierungen des Bodenbelags beschränkt. Die Anzahl und Konfiguration der Kett- und Schusssysteme sowie die Materialien für die Kett- und Schussfäden (insbesondere für die Polkette) können in einem weiten Bereich variiert werden, wie es auf dem Gebiet der Teppichherstellung an sich bekannt ist. Anstelle des gezeigten Bouclé-Gewebes lässt sich die Erfindung auf dieselbe Weise auch beispielsweise bei Velours- oder Flachteppichen realisieren.

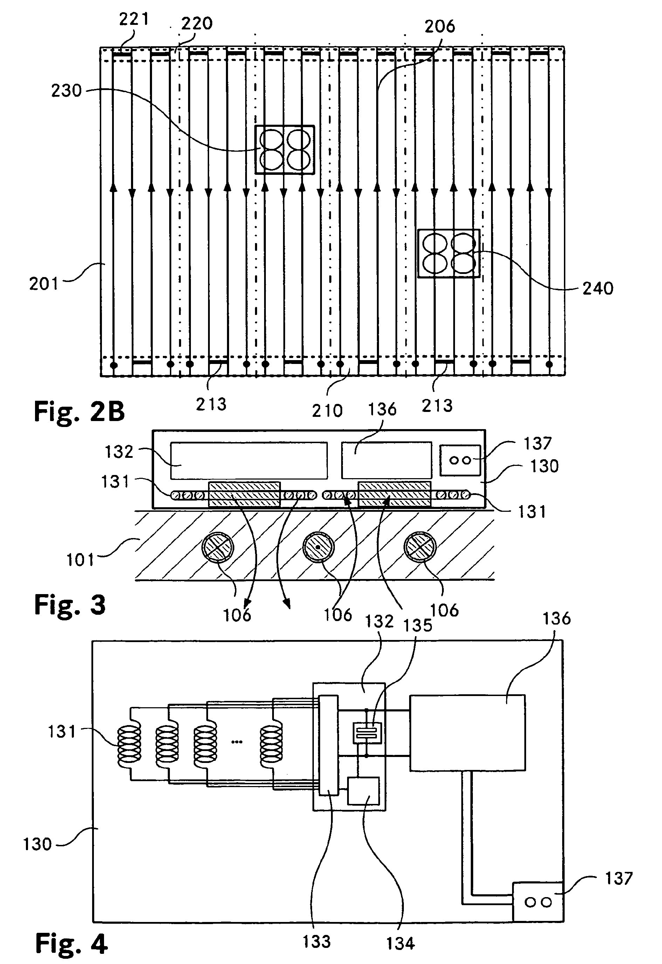

Die Figuren 2A, 2B sind schematische Darstellungen verschiedener erfindungsgemässer Anordnungen zur Stromversorgung mit einer ersten Leitertopologie. Die Figur 2A zeigt einen Bodenbelag 101 gemäss einer der Figuren 1A-1E mit einer Reihe von parallel verlaufenden Stromleitern 106. An einer Längskante ist auf der Unterseite des Bodenbelags 101 eine Einspeisung 110 angeordnet, welche sich quer zu den Stromleitern 106 erstreckt. Die Einspeisung 110 umfasst ein Anschlussterminal 111 mit zwei Anschlussklemmen. Eine der Anschlussklemmen stellt einen direkten Kontakt mit dem äussersten Stromleiter 106.1 am rechten Rand des Bodenbelags 101 her, die andere ist mittels einer Verbindungsleitung 112 mit dem äussersten Stromleiter 106.2 am linken Rand des Bodenbelags 101 leitend verbunden.

Die Einspeisung 110 umfasst weiter mehrere Verbindungsstege 113, welche jeweils zwei benachbarte Stromleiter 106 leitend verbinden. Die Verbindungsstege 113 sind so angeordnet, dass von aussen gezählt die Stromleiter 2/3, 4/5, 6/7, 8/9 etc. miteinander leitend verbunden sind.

Auf der der Einspeisung 110 gegenüberliegenden Längsseite ist ein Verbindungselement 120 auf der Unterseite des Bodenbelags 101 angeordnet. Dieses erstreckt sich ebenfalls über die ganze Breite des Bodenbelags 101 und umfasst Verbindungsstege 121, welche ebenfalls jeweils zwei benachbarte Stromleiter 106 leitend verbinden. Die Verbindungsstege 121 sind so angeordnet, dass von aussen gezählt die Stromleiter 1/2, 3/4, 5/6, 7/8 miteinander verbunden sind.

Im Bodenbelag 101 wird somit ein einziger Stromkreis gebildet, welcher von der ersten Anschlussklemme des Anschlussterminals 111 über sämtliche Stromleiter 106 im Bodenbelag 101 und die Verbindungsleitung 112 zur zweiten Anschlussklemme führt.

An die Anschlussklemmen wird eine Wechselstromquelle angeschlossen, welche beispielsweise einen elektrischen Strom mit einer Frequenz von 40 kHz und einer Spannung von 20 V erzeugt. Zur Auskopplung von elektrischer Energie wird eine Kopplungseinrichtung 130 in die Nähe der Teppichoberfläche gebracht (beispielsweise auf diese gestellt). Die Kopplungseinrichtung 130 umfasst mehrere horizontal angeordnete Spulen 131, in welchen aufgrund des in den Stromleitern 106 erzeugten Magnetfeldes ein Strom induziert wird. Dieser Strom wird abgegriffen, transformiert und steht anschliessend zur Speisung eines Verbrauchers zur Verfügung (vgl. unten). Die Dimensionen und Abstände der Spulen 131 sind so gewählt, dass bei beliebiger Anordnung der Kopplungseinrichtung 130 zumindest in einer der Windungen ein Strom induziert wird, insbesondere sind die Quer- und Längsabstände der Windungszentren unterschiedlich vom Abstand der Stromleiter bzw. von einem ganzzahligen Vielfachen davon.

Die Figur 2B zeigt eine Variante der Anordnung der Figur 2A, bei welcher im Bodenbelag 201 mehrere Stromkreise gebildet sind. Der Bodenbelag 201 und das Verbindungselement 220 entsprechen den Pendants in der Figur 2A, d. h. die benachbarten Stromleiter 1/2, 3/4, 5/6, 7/8 sind wiederum miteinander durch Verbindungsstege 221 miteinander verbunden. Von der ersten Ausführungsform unterscheidet sich die Anordnung gemäss Figur 2B aber durch eine unterschiedliche Einspeisung 210. Diese umfasst mehrere Anschlussklemmen für voneinander unabhängige Stromkreise, welche von aussen gezählt eine direkte Kontaktierung der Stromleiter 1, 4, 5, 8, 9, 12, 13 etc. ermöglichen, sowie Verbindungsstege 213, welche die Stromleiter 2/3, 6/7, 10/11etc. miteinander verbinden. Es werden somit mehrere unabhängig speisbare Stromkreise mit je vier längs verlaufenden Stromleitern 206 gebildet. In der Figur 2B sind zwei Kopplungseinrichtungen 230, 240 dargestellt, welche identisch sind mit der Kopplungseinrichtung gemäss Figur 2A. Sie sind in zwei Raumbereichen des Bodenbelags 201 positioniert, welche voneinander unabhängige Stromkreise aufweisen und können somit auf einfache Weise separat mit Strom versorgt und gesteuert werden.

Die Leitertopologie kann auf vielerlei Weise weiter variiert werden. So kann beispielsweise jeder Leiter einzeln und gegebenenfalls an beiden Enden von aussen kontaktierbar sein, um beispielsweise Steuerdaten zu übertragen oder als Sensor (z. B. einer Alarmanlage) zu dienen. In diesem Fall wird beidseitig eine Einspeisung bzw. ein Kontaktelement vorgesehen. Die Stromrichtung kann im Gegensatz zu den dargestellten Ausführungen für alle Leiter jeweils dieselbe sein.

Die Figur 3 zeigt einen vertikalen Querschnitt durch einen erfindungsgemässen Bodenbelag und eine erfindungsgemässe Kopplungseinrichtung, entlang der Linie A-A' in der Figur 2A. Im Ausschnitt dargestellt sind drei im Bodenbelag 101 verlaufende Stromleiter 106 mit Isoliermantel, wobei aufgrund der gewählten Leitertopologie die Stromrichtung der beiden äusseren Leiter 106 zu derjenigen im mittleren Leiter 106 entgegengesetzt ist.

Auf dem Bodenbelag 101 steht die Kopplungseinrichtung 130 mit mehreren Spulen 131 mit Ferritkernen. Die Figur 4 zeigt ein Blockschema der Kopplungseinrichtung 130. Schematisch dargestellt sind nur die wichtigsten Bauelemente. Weitergehende Angaben zu Kopplungseinrichtungen können beispielsweise der WO 96/02970 (Auckland Uniservices Limited) entnommen werden.

Das von den Stromleitern 106 erzeugte Magnetfeld induziert Ströme in den Windungen der Spulen 131. Im in der Figur 3 dargestellten Beispiel sind die Spulen 131 so positioniert, dass die Stromrichtungen in den gezeigten zwei Spulen 131 jeweils entgegengesetzt sind. Je nach Positionierung der Kopplungseinrichtung 130 können die Ströme aber auch jeweils in derselben Richtung fliessen. Damit die induzierten Ströme stets konstruktiv überlagert werden können, umfasst die Kopplungseinrichtung 130 einen Überlagerer 132 mit Messkreisen und Umschaltern 133, einer internen Steuerung 134 sowie einer regelbaren Kapazität 135. Letztere dient zur Anpassung des sekundären Schwingkreises an die Resonanzfrequenz des Primärkreises.

Der erzeugte Strom wird anschliessend in einer Stromregelungseinheit 136 mit an sich bekannten Komponenten hinsichtlich Stromart (AC/DC), Spannung und gegebenenfalls Frequenz aufbereitet und an einem Anschlussterminal 137 zur Verfügung gestellt. An dieses Anschlussterminal 137 wird ein Verbraucher angeschlossen. Die Kopplungseinheit 130 kann ebenfalls direkt im Verbraucher (z. B. einer Leuchte, einer Ladeeinrichtung für einen Akkumulator eines Fahrzeugs etc.) integriert sein.

Der innere Aufbau der Kopplungseinrichtung kann den übertragenen elektrischen Leistungen, dem Aufbau des Bodenbelags und dem Einsatzzweck des Verbrauchers angepasst werden. Die Kopplungseinrichtung kann anstelle oder zusätzlich zu den Mitteln für die Energieübertragung auch Datenübertragungsmittel aufweisen, mittels welchen aus den Stromleitern aufgenommene Steuer- oder Nutzdaten an den Verbraucher oder an Datenendgeräte übertragen werden können.

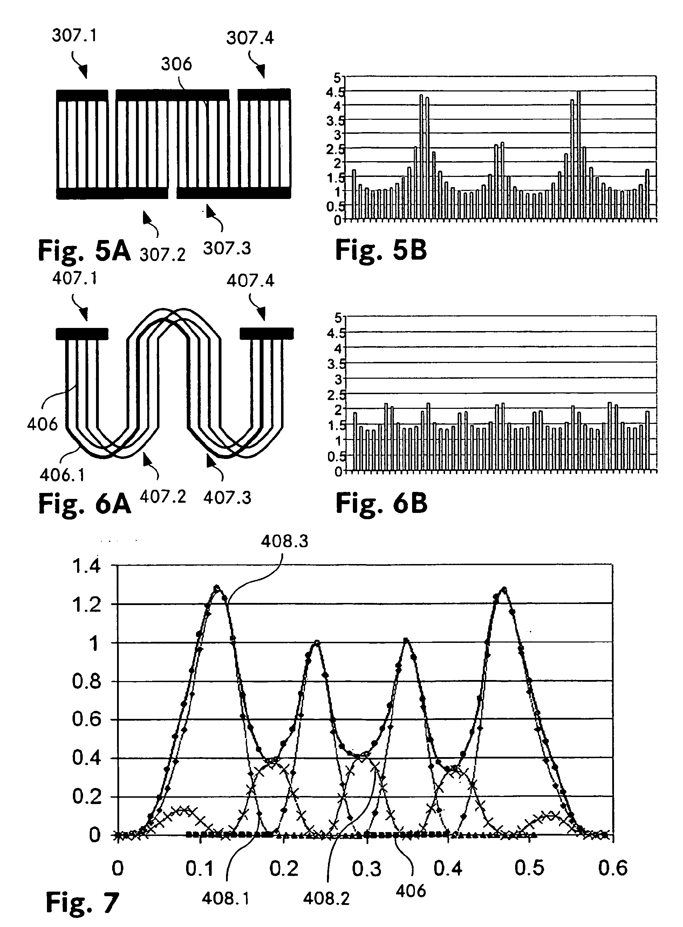

Die Figur 5A ist eine schematische Darstellung einer zweiten Leitertopologie einer erfindungsgemässen Anordnung. Zur Erhöhung des Stromflusses werden jeweils mehrere nebeneinander liegende parallele Stromleiter 306 zu einer Gruppe 307.1...307.4 zusammengefasst und an beiden Längsenden elektrisch miteinander verbunden. Die Gruppen 307.1...307.4 werden elektrisch in Serie geschaltet, so dass sich eine W-förmige Topologie ergibt. Die elektrischen Eigenschaften der Anordnung wurden anhand eines Teppichs mit einer Ausdehnung von 5 m x 0.5 m untersucht, an dessen Unterseite 50 parallele Drähte mit einem Abstand von 9 mm angeordnet wurden. Die äussersten zwei Drähte wurden nicht verwendet, während die restlichen 48 Drähte zu vier Gruppen von je zwölf Drähten zusammengefasst und wie in der Figur 5A schematisch dargestellt hintereinander geschaltet wurden.

Die Enden dieser Leiteranordnung wurden an eine für die induktive Stromversorgung geeignete LCL-Stromversorgung angeschlossen. Diese erzeugte einen Wechselstrom von 17 A mit einer Frequenz von 38.4 kHz. Die Induktivität der getesteten Stromleiteranordnung beträgt 4.3 $\mu$H, zur Anpassung an die Lastinduktivität der Stromversorgung von 52 $\mu$H wurde eine entsprechende zusätzliche Induktivität in Serie mit der Leiteranordnung geschaltet.

Die Figur 5B zeigt die resultierende räumliche Stromverteilung der zweiten Leitertopologie, gemessen in Ampere. Es ist gut ersichtlich, dass zwischen den einzelnen Leitern grosse Unterschiede in der resultierenden Stromstärke bestehen. Das Verhältnis zwischen den grössten und kleinsten gemessenen Stromstärken beträgt ungefähr 4.5. Dies ist insofern nachteilig, als die Verlustleistung in einem Leiter im Wesentlichen mit dem Quadrat der Stromstärke wächst und somit grosse Ströme zu einer Erwärmung der entsprechenden Leiter und zu entsprechenden Verlusten elektrischer Energie führen. Zusätzlich ist das Auskoppeln elektrischer Energie in Bereichen mit vergleichsweise geringer Stromstärke möglicherweise erschwert oder gar unmöglich. Die Ursache der Unterschiede liegt primär in magnetischen Effekten: Nahe beieinander liegende Leiter, welche durch hochfrequente Ströme durchflossen werden, interagieren. Im vorliegenden Fall hat diese Interaktion zur Folge, dass die in der jeweiligen Leitergruppe aussen liegenden Leiter, welche in Nachbarschaft zu den Leitern mit entgegengesetztem Stromfluss sind, grössere Ströme transportieren als innen liegende Leiter.

Die Figur 6A ist eine schematische Darstellung einer dritten Leitertopologie einer erfindungsgemässen Anordnung, mit welcher eine gleichmässigere Verteilung der Stromstärken auf die einzelnen Stromleiter 406 erreicht werden kann. Die Stromleiter 406 sind wiederum zu Gruppen 407.1... 407.4 zusammengefasst und in einer W-förmigen Topologie zusammengeschaltet. Die Stromleiter 406 einer Gruppe 407.1...407.4 sind aber im Gegensatz zur Topologie gemäss der Figur 5A nur noch am Anfang und am Ende parallel miteinander verbunden. Dazwischen sind die Stromleiter 406 benachbarter Gruppen 407.1...407.4 jeweils einzeln miteinander verbunden, d. h. die Topologie wird zwischen den beiden Anschlussenden durch mehrere elektrisch voneinander isolierte W-förmige Leiter gebildet. Von Gruppe zu Gruppe 407.1...407.4 ist zusätzlich die Reihenfolge der Stromleiter 406 vertauscht, so dass die Abstände der in Serie miteinander verbundenen Stromleiter 406 vom Rand der jeweiligen Gruppe 407.1...407.4 von Gruppe zu Gruppe 407.1...407.4 variieren. Ein bestimmter Stromleiter 406.1 befindet sich beispielsweise abwechselnd am äusseren Rand einer Gruppe 407.1, 407.3 und im inneren Bereich einer Gruppe 407.2, 407.4.

Dadurch werden in den einzelnen W-förmigen Leitern die positionsabhängigen magnetischen Effekte ausgeglichen und es ergibt sich die in der Figur 6B dargestellte wesentlich gleichmässigere Stromverteilung (wiederum angegeben in Ampere). Das Verhältnis zwischen den grössten und kleinsten gemessenen Stromstärken beträgt nur noch ungefähr 1.7. Die Messungen wurden bei demselben Versuchsaufbau wie oben erwähnt durchgeführt, wobei lediglich die Verschaltung der einzelnen Stromleiter geändert wurde.

Durch eine geschickte Verteilung der Stromleiter auf verschiedene Positionen innerhalb der aufeinander folgenden Gruppen lässt sich die Homogenität nach Bedarf weiter optimieren.

Die Figur 7 zeigt die räumliche Verteilung der auskoppelbaren Leistung in einer Anordnung mit der dritten Leitertopologie gemäss Figur 6A. Dazu wurden Stromflüsse gemessen, die durch die Horizontal- und Vertikalkomponente des durch die Stromleiter 407 erzeugten Magnetfelds induziert wurden. Für die Messungen wurde eine flache Sonde einer Grösse von 115x40x10 mm (BxLxH) eingesetzt mit zwei Spulen mit je zwanzig Windungen, die je 20 mm von der jeweiligen Endkante entfernt in den längsseitigen Endbereichen der Sonde angeordnet waren. Zur Messung des horizontalen Flusses wurden die Spulen in Serie geschaltet, zur Messung des vertikalen Flusses wurde die zweite Spule in umgekehrter Richtung an die erste Spule angeschlossen. Als Messwert wurde die elektromotorische Kraft (Leerlaufspannung) $V_{oc}$ gewählt, welche proportional ist zum magnetischen Fluss. Die Messsonde wurde in einem Abstand von 4 mm von der Teppichoberfläche positioniert und in Schritten von 10 mm dem Teppich entlang geführt.

In der Figur 7 sind nun sowohl die durch Nutzung des horizontalen Flusses auskoppelbare unkompensierte Scheinleistung 408.1, als auch die durch Nutzung des vertikalen Flusses auskoppelbare unkompensierte Scheinleistung 408.2 und die Summe 408.3 der beiden jeweils in der Einheit VA dargestellt. Die unkompensierte Scheinleistung ist definiert als Produkt der elektromotorischen Kraft mit dem Kurzschlussstrom und wurde im vorliegenden Fall als

$$S_u = V_{oc}^2 / X$$

berechnet, wobei X den Blindwiderstand der Spule bezeichnet und im vorliegenden Fall 39 Q beträgt.

Es ist klar ersichtlich, dass sich durch Nutzung des horizontalen Flusses deutlich grössere Leistungen auskoppeln lassen. Der vertikale Fluss trägt aber in den Minima des horizontalen Flusses dazu bei, dass auch dort elektrische Energie aus dem Teppich aufgenommen werden kann. Durch Einsatz eines kompensierten Aufnehmers sollte sich eine ungefähr zehnmal höhere Wirkleistung auskoppeln lassen, also im Bereich der Maxima des Feldflusses ca. 13 W.

Um sowohl den horizontalen als auch den vertikalen Feldfluss zum Auskoppeln von Energie heranzuziehen, wird mit Vorteil ein Aufnehmer mit mehreren Spulen eingesetzt, wobei entweder sowohl seriell als auch entgegengesetzt zusammengeschaltete Spulen vorhanden sind oder wo die Zusammenschaltung nach Bedarf hin- und her geschaltet werden kann.

Weitere Messungen, bei welchen der vertikale Abstand der Messsonde von der Oberfläche des Teppichs variiert wurde, haben ergeben, dass sich nutzbare elektrische Energie bis in eine Höhe von 15 cm auskoppeln lässt, wobei die aukoppelbare Wirkleistung aber mit zunehmender Höhe abnimmt.

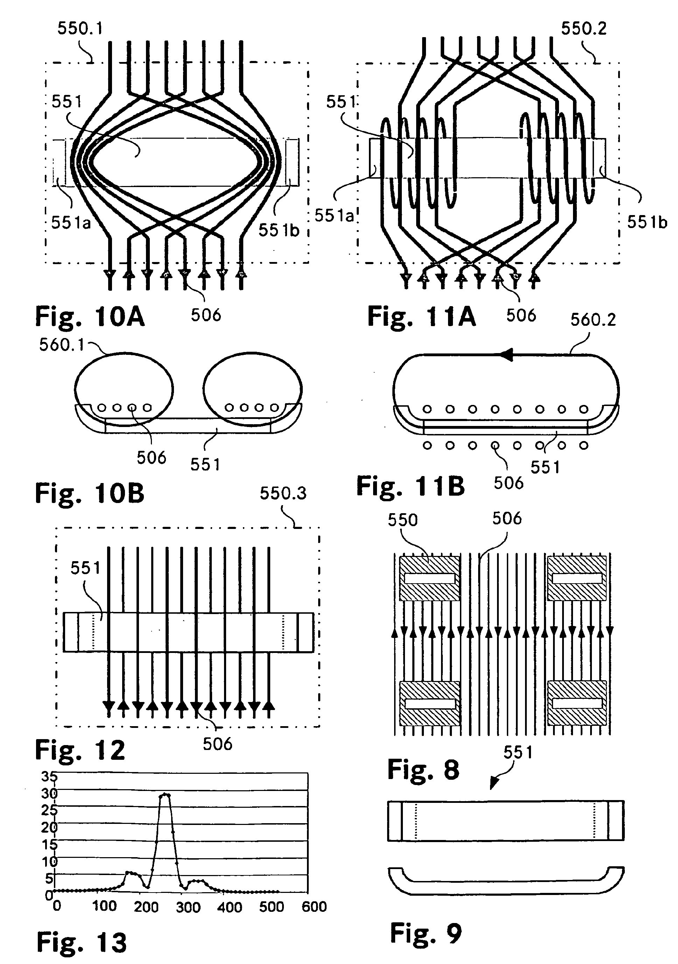

Die Figur 8 ist eine schematische Darstellung einer Leitertopologie mit lokalisierten Auskopplungsstellen. Der Stromfluss in aufeinander folgenden parallelen Stromleitern 506 ist - wie vorstehend bereits im Zusammenhang mit den Figuren 2A, 2B beschrieben - jeweils entgegengesetzt. An gewissen Orten sind lokalisierte Auskopplungsstellen 550 vorgesehen, an welchen elektrische Energie induktiv aus den Stromleitern ausgekoppelt werden kann. Die Breite einer Auskopplungsstelle 550 umfasst mehrere parallele Stromleiter 506.

Die Figur 9 zeigt ein ferromagnetisches Element zur lokalen Auskopplung von elektrischer Energie an einer der in der Figur 8 dargestellten Auskopplungsstellen in einer Draufsicht und einer Seitenansicht. Das Element 551 ist im Wesentlichen balkenförmig mit einer Länge von 75 mm und einer Breite von 12 mm, wobei seine Längsenden leicht abgebogen sind. Die Dicke des Elements 551 beträgt ca. 4 mm. Das Element 551 ist aus Finemet®

($Fe_{73.5}Si_{13.5}B_9Nb_3Cu_1$) der Firma Hitachi Metals Ltd. gefertigt, einem nanokristallinen, weichmagnetischen Material auf der Basis von Eisen. Dieses Material weist bessere magnetische Eigenschaften auf als Ferrit und ist viel dauerhafter.

Die Figuren 10A, B zeigen eine erste Leiterkonfiguration an einer lokalen Auskopplungsstelle in einer Draufsicht und einem vertikalen Querschnitt. Die Auskopplungsstelle 550.1 wird durch ein in der Figur 9 dargestelltes Element 551 gebildet, welches mit seiner Hauptausdehnung quer zur Richtung der parallelen Stromleiter 506 und mit seiner Hauptebene parallel zur Ebene der Stromleiter 506 orientiert ist, wobei alle Stromleiter 506 oberhalb des Elements 551 verlaufen. Die Stromleiter 506, welche den Bereich der Auskopplungsstelle 550.1 durchlaufen, sind in horizontaler Richtung (d. h. in der Ebene der Stromleiter 506) nach Richtung separiert, so dass in einem ersten Endbereich 551a des Elements 551 Stromleiter 506 einer ersten Stromrichtung zusammengefasst sind, während in einem zweiten, entgegengesetzten Endbereich 551b Stromleiter 506 der entgegengesetzten Stromrichtung zusammengefasst sind.

In der Figur 10B ist neben der Leiterkonfiguration auch das resultierende magnetische Feld 560.1 skizziert. Nutzbar ist primär der vertikale Feldfluss. Messungen mit der oben erwähnten Sonde und unter Benutzung der oben erwähnten Stromversorgung haben ergeben, dass sich an einer lokalisierten Auskopplungsstelle 550.1 eine Scheinleistung von 4.4 VA auskoppeln lässt. Mit einem kompensierten Aufnehmer sind Wirkleistungen von 15 W erreicht worden.

Die Figur 11A zeigt eine Draufsicht auf eine zweite Leiterkonfiguration an einer lokalen Auskopplungsstelle. Die Auskopplungsstelle 550.2 wird durch ein in der Figur 9 dargestelltes Element 551 gebildet, welches mit seiner Hauptausdehnung wiederum quer zur Richtung der parallelen Stromleiter 506 und mit seiner Hauptebene parallel zur Ebene der Stromleiter 506 orientiert ist. Die Stromleiter 506, welche den Bereich der Auskopplungsstelle 550.2 durchlaufen, sind wiederum in horizontaler Richtung (d. h. in der Ebene der Stromleiter 506) nach Richtung separiert und zusätzlich je einmal um den entsprechenden Endbereich 551a bzw. 551b des Elements 551 gewunden. Die Windungsrichtung ist für die beiden Drahtgruppen in den beiden Endbereichen 551 a, 551 b umgekehrt gewählt, so dass die Stromrichtung aller Stromleiter oberhalb und unterhalb des Elements 551 jeweils parallel ist.

In der Figur 11B ist neben der Leiterkonfiguration auch das resultierende magnetische Feld 560.2 skizziert. Nutzbar ist primär der horizontale Feldfluss. Messungen mit der oben erwähnten Sonde und unter Benutzung der oben erwähnten Stromversorgung haben ergeben, dass sich an einer lokalisierten Auskopplungsstelle 550.2 eine Scheinleistung von 6.7 VA auskoppeln lässt. Mit einem kompensierten Aufnehmer sind Wirkleistungen von 20 W und mehr erreicht worden.

Die Figur 12 zeigt eine Draufsicht auf eine dritte Leiterkonfiguration an einer lokalen Auskopplungsstelle 550.3. Diese wird wiederum durch das in der Figur 9 dargestellte Element 551 gebildet, welches mit seiner Hauptausdehnung quer zur Richtung der parallelen Stromleiter 506 und mit seiner Hauptebene parallel zur Ebene der Stromleiter 506 orientiert ist. Im Gegensatz zu den vorangegangenen Beispielen sind die Stromleiter 506, welche den Bereich der Auskopplungsstelle 550.3 durchlaufen, nun in vertikaler Richtung separiert, so dass die Stromrichtung aller Stromleiter 506, die oberhalb bzw. unterhalb des Elements 551 verlaufen, jeweils parallel ist. Diese Konfiguration ist geometrisch einfach und lässt sich leicht realisieren.

Das resultierende magnetische Feld entspricht qualitativ dem in der Figur 11B skizzierten. Messungen haben ergeben, dass eine Scheinleistung von 1.5 VA auskoppelbar ist. Mit einem kompensierten Abnehmer liesse sich eine Wirkleistung von ca. 6 Watt auskoppeln.

Die Figur 13 zeigt die in der Sonde erzeugte elektromotorische Kraft im Bereich einer lokalen Auskopplungsstelle 550. Es ist deutlich sichtbar, dass der magnetische Fluss rasch abfällt und dass in einer gewissen Entfernung von der Auskopplungsstelle 550 (ca. 10 cm) das Feld praktisch verschwindet. Die in den Figuren 10-12 dargestellten Konfigurationen bieten somit den Vorteil, dass in Bereichen des Bodenbelags ohne Auskopplungsstellen praktisch keine induktiven Wirkungen auftreten und dass die Energie somit sicher und zielgerichtet den Verbrauchern zugeführt werden kann.

Das Einsetzen der Elemente 551 im Bereich der Auskopplungsstellen 550 muss bei der Fertigung des Teppichs vorbereitet werden. Dazu werden an den entsprechenden Stellen beispielsweise Schlaufen im eingewobenen Stromleiter erzeugt, in welche später die Elemente 551 eingefügt werden können. Weil bei der bestmöglichen dargestellten Anordnung gemäss den Figuren 11A, 11B das Element 551 ganz von Windungen der Stromleiter zu umgeben ist, kann es von Vorteil sein, während der Fertigung des Teppichs angepasste Platzhalter einzuarbeiten, deren Platz in einem späteren Arbeitsgang durch die Elemente 551 eingenommen werden kann.

Die Anordnung zur Versorgung von lokalisierten Auskopplungsstellen ist auch beispielsweise in einem Flugzeuginnenraum verwendbar, wo das erzeugte magnetische Feld ausserhalb dieser Auskopplungsstellen möglichst gering gehalten werden soll. Durch die beschriebene Anordnung lassen sich beispielsweise elektrische Pumpen zum Aufpumpen von Luftkissen von Flugzeugsitzen, aber auch Beleuchtungselemente oder andere (stationäre) Verbraucher mit Strom versorgen.

Das Layout der Stromleiter und die Positionen der Auskopplungsstellen können der spezifischen Situation angepasst werden. So müssen die Stromleiter beispielsweise nicht im ganzen Teppich eingewoben sein, sondern können nur in beabstandeten längslaufenden Bereichen vorgesehen sein. Auch die Konfiguration der Auskopplungsstellen lässt sich anpassen; bei einer Konfiguration gemäss Figur 11A kann beispielsweise jeder Stromleiter in mehreren Windungen um das ferromagnetische Element herumgeführt sein.

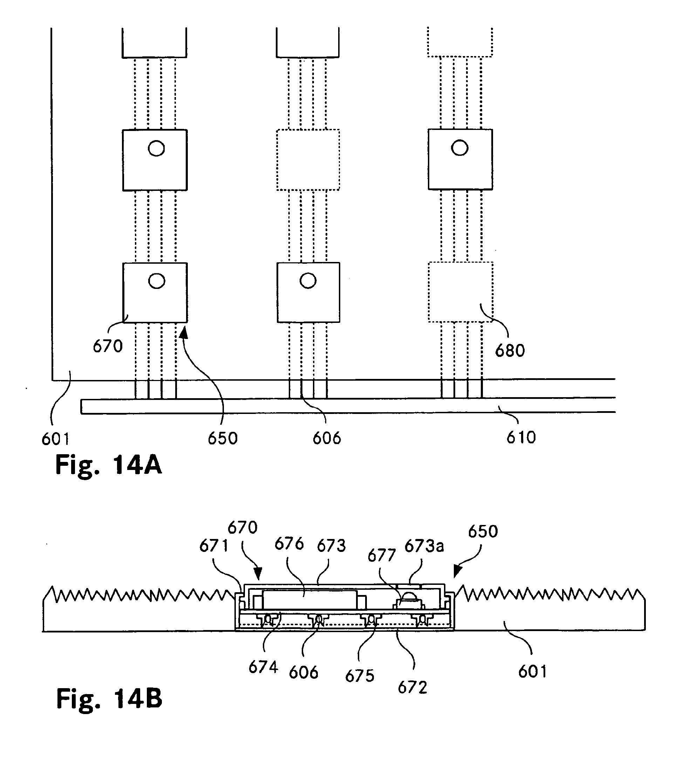

Die Figuren 14A, B zeigen eine weitere Ausführungsform einer erfindungsgemässen Anordnung mit einer Reihe von in den Bodenbelag einsetzbaren Leuchtelementen. Die Figur 14A zeigt eine Draufsicht auf einen entsprechenden Bodenbelag. Dabei handelt es sich wiederum grundsätzlich um einen Teppich 601, wie er oben im Zusammenhang mit den Figuren 1A-E beschrieben worden ist. Im Teppich 601 sind mehrere Einsetzstellen 650 vorgesehen, in welche Leuchtelemente 670 eingesetzt werden können. Die Grösse einer Einsetzstelle beträgt nur ca. 3x3 cm. Im Bereich der Einsetzstellen 650 ist der Teppich 601 ohne Polmaterial gefertigt, so dass auf der Oberseite des Teppichs 601 quadratische Ausnehmungen gebildet sind. Nicht benutzte Einsetzstellen 650 werden durch Deckel 680 aus Teppichmaterial verschlossen und sind optisch aus einer gewissen Distanz kaum mehr erkennbar. Die im Teppich 601 eingewobenen Stromleiter 606 sind zudem im Endzustand nirgends mehr offen zugänglich.

In den Teppich 601 sind Stromleiter 606 derart eingewoben, dass jede Einsetzstelle 650 durch vier parallele Stromleiter 606 durchlaufen wird. Die eingewobenen Stromleiter 606 befinden sich aufgrund des fehlenden Polmaterials im Bereich der Einsetzstellen 650 an der Oberfläche und sind deshalb einfach kontaktierbar. Die Stromleiter 606 werden durch eine randseitig angeordnete Einspeisung 610 mit Strom versorgt.

In der Figur 14B ist ein in eine Einsetzstelle 650 eingesetztes Leuchtelement 670 im Querschnitt dargestellt. Die äussere Form des Leuchtelements 670 entspricht den Dimensionen der Einsetzstelle 650, so dass an den seitlichen Rändern ein direkter Anschluss zum Teppich 601 und auf der oberen Seite eine durchgehende Oberfläche geschaffen werden. Das Leuchtelement 670 umfasst ein Gehäuse 671 aus Kunststoff mit einem Bodenteil 672 und einer an dieser gehaltenen Abdeckung 673. Im Gehäuse 671 aufgenommen ist eine Leiterplatte 674, an deren Unterseite vier Schneidklemmen 675 geringer Bauhöhe angebracht sind. Auf der Oberseite der Leiterplatte 674 sind ein Stromversorgungsmodul 676 mit einem Transformator und eine LED-Lichtquelle 677 befestigt. Die LED-Lichtquelle 677 ist durch einen transparenten Abschnitt 673a der Abdeckung 673 von der Oberseite des Teppichs 601 her sichtbar.

Jede der Schneidklemmen 675 kontaktiert einen der die Einsetzstelle 650 durchlaufenden Stromleiter 606. Zu diesem Zweck ragen die Schneidklemmen 675 soweit über die Unterseite des Leuchtelements 670 hinaus, dass die freiliegenden Stromleiter 606 durch die Spitzen der Schneidklemmen 675 kontaktiert werden. Die Spitzen sind so ausgebildet, dass sie an der Kontaktstelle mit dem Stromleiter 606 die vorhandene Isolation durchstechen (bzw. durchschneiden) und somit direkt leitenden Kontakt schaffen. Der Eingangsbereich der Spitze ist konisch zulaufend ausgebildet, so dass die Stromleiter 606 auch dann von der Schneidklemme 675 aufgenommen werden können, wenn sie in seitlicher Richtung leicht zu einer Idealposition versetzt sind.

Die Schneidklemmen 675 sind mit dem Stromversorgungsmodul 676 verbunden, wobei die Stromleiter 606 so angeschlossen werden, dass mehrere Leuchtelemente 670, welche in demselben Strang angeordnet werden, parallel zueinander geschaltet sind. Pro Leuchtelement 670 werden zudem pro Polarität zwei Stromleiter 606 parallel kontaktiert, so dass die Ströme in den einzelnen Stromleitern 606 und somit die Erwärmung der Stromleiter 606 und die damit verbundenen Verluste reduziert werden können. Das Stromversorgungsmodul 676 wandelt die aufgenommene Energie auf an sich bekannte Weise derart um, dass die LED-Lichtquelle 677 gespeist werden kann.

Daneben nimmt das Stromversorgungsmodul 676 auch Steuerungsfunktionen wahr, schaltet also die LED ein und aus, steuert gegebenenfalls die Helligkeit und/oder die Lichtfarbe. Die Anordnung kann so ausgebildet sein, dass die Lichtpunkte im Teppich 601 durch einen Computer innerhalb der Möglichkeiten der LED-Lichtquellen 677 beliebig hinsichtlich Helligkeit und Farbe angesteuert werden können. Die Steuerungsinformationen können durch die Stromleiter 606 übermittelt werden, indem sie z. B. der Versorgungsspannung überlagert werden. Es gibt auch andere Übertragungsmöglichkeiten, z. B. durch gesonderte, in den Teppich eingewobene Datenleiter oder durch drahtlose Übertragungstechniken. Im einfachsten Fall werden die LED-Lichtquellen 677 durch das Anlegen der Spannung an die Stromleiter 606 gesteuert, wobei jeweils sämtliche Leuchtelemente 670 eines Strangs leuchten oder dunkel bleiben.

Zusammenfassend ist festzustellen, dass durch die Erfindung eine Anordnung zur Versorgung eines Verbrauchers mit elektrischer Energie geschaffen wird, welche eine hohe Flexibilität ermöglicht und sich gut in Räume integrieren lässt.

## Patentansprüche

1. Textiler, gewobener Teppich (1a, 1b; 101; 201) mit längslaufenden Kettfäden (2, 3a, 3b, 4) und querlaufenden Schussfäden (5), wobei drei oder mehr beabstandete, zueinander im Wesentlichen parallele Stromleiter (6a, 6b; 106; 206) entweder als Kettfäden (2, 3a, 3b, 4) oder als Schussfäden (5) eingewoben sind, wobei die Stromleiter während des Webvorgangs einen Teil einer Füllkette, einer Bindekette oder der Schussfäden ersetzen, **dadurch gekennzeichnet, dass** die Kettfäden Füllketten (2), Bindeketten (3, 3b) und Polketten (4) umfassen, wobei die Stromleiter (6a, 6b) als Füllketten (2) eingewoben sind.

2. Teppich nach Anspruch 1, **dadurch gekennzeichnet, dass** jeder Stromleiter (6a, 6b; 106; 206) eine umhüllende Isolationsschicht aufweist.

3. Teppich nach Anspruch 1 oder 2, **dadurch gekennzeichnet, dass** die Stromleiter (6a, 6b; 106; 206) als metallische Litzen, insbesondere Kupferlitzen, ausgebildet sind.

4. Teppich nach einem der Ansprüche 1 bis 3, **dadurch gekennzeichnet, dass** der Abstand zweier benachbarter Stromleiter (6a, 6b; 106; 206) 0.5 - 2 cm beträgt.

5. Anordnung zur Versorgung eines Verbrauchers (677) mit elektrischer Energie einer Stromquelle, umfassend

   a) einen textilen, gewobenen Teppich nach einem der Ansprüche 1 bis 4;
   b) eine Einspeisung (110; 210; 610) zum Anschluss der Stromleiter (6a, 6b; 106; 206; 606) an die Stromquelle; und
   c) eine Kopplungseinrichtung (130; 230, 240; 675, 676) zur Aufnahme von elektrischer Energie aus den Stromleitern (6a, 6b; 106; 206; 606) im Teppich (1a, 1b; 101; 201; 601) und zum Weitertransport an den Verbraucher (677), wenn die Kopplungseinrichtung (130; 230, 240; 675, 676) in einen Stromaufnahmebereich des Teppichs (1a, 1b; 101; 201; 601) gebracht wird.

6. Anordnung nach Anspruch 5, **dadurch gekennzeichnet, dass** die Kopplungseinrichtung (130; 230, 240) derart ausgebildet ist, dass elektrische Energie induktiv aus den Stromleitern (6a, 6b; 106; 206) aufgenommen werden kann.

7. Anordnung nach Anspruch 6, **dadurch gekennzeichnet, dass** die drei oder mehr Stromleiter (6a, 6b; 106; 206; 606) eine erste Gruppe bilden, über welche elektrische Energie in eine erste Richtung übertragen wird, sowie eine zweite Gruppe, über welche elektrische Energie in eine zur ersten Richtung entgegengesetzte zweite Richtung übertragen wird, wobei jede Gruppe ein magnetisches Feld erzeugt, welches den Stromaufnahmebereich des Teppichs (1a, 1b; 101; 201; 601) bestimmt.

8. Anordnung nach Anspruch 7, **dadurch gekennzeichnet, dass** die erste Gruppe und die zweite Gruppe jeweils zwei oder mehrere Stromleiter (6a, 6b; 106; 206; 606) umfassen.

9. Anordnung nach Anspruch 8, **dadurch gekennzeichnet, dass** jeweils mehrere Stromleiter (306; 406) einer Gruppe elektrisch parallel verbunden sind.

**10.** Anordnung nach Anspruch 9, **dadurch gekennzeichnet, dass** Stromleiter (406) benachbarter Gruppen (407.1... 407.4) einzeln miteinander verbunden sind und dass eine Reihenfolge der Stromleiter (406) zwischen den benachbarten Gruppen (407.1...407.4) derart vertauscht ist, dass ein Abstand mindestens eines der Stromleiter (406) von einem nächstliegenden äussersten Stromleiter (406) der jeweiligen Gruppe (407.1...407.4) zwischen einer ersten der benachbarten Gruppen (407.1...407.4) und einer zweiten der benachbarten Gruppen (407.1...407.4) unterschiedlich ist.

**11.** Anordnung nach Anspruch 6, **dadurch gekennzeichnet, dass** die drei oder mehr Stromleiter (6a, 6b; 106; 206; 606) eine erste Gruppe bilden, über welche elektrische Energie in eine erste Richtung übertragen wird sowie eine zweite Gruppe, über welche elektrische Energie in eine zur ersten Richtung entgegengesetzte zweite Richtung übertragen wird, wobei benachbarte Stromleiter (6a, 6b; 106; 206; 606) jeweils abwechselnd der ersten und der zweiten Gruppe angehören.

**12.** Anordnung nach Anspruch 6 oder 11, **dadurch gekennzeichnet, dass** die Einspeisung derart ausgebildet ist, dass beim Anschluss der Stromleiter (506) an die Stromquelle im Bereich der angeschlossenen Stromleiter (506) eine magnetische Feldverteilung mit mindestens einem lokalisierten Maximum erzeugt wird, während in weiteren Regionen dieses Bereichs das magnetische Feld gering ist, wobei der Bodenbelag bei dem mindestens einen lokalisierten Maximum der magnetischen Feldverteilung mit einem Element (551) aus ferromagnetischem Material versehen ist.

**13.** Anordnung nach Anspruch 12, **dadurch gekennzeichnet, dass** das Element (551) aus ferromagnetischem Material zwischen die Stromleiter (506) eingewoben ist und sich in Querrichtung über mehrere benachbarte Stromleiter (506) erstreckt.

**14.** Anordnung nach Anspruch 13, **dadurch gekennzeichnet, dass** mehrere beabstandete Elemente (551) aus ferromagnetischem Material angeordnet sind und dass mehrere lokalisierte Maxima erzeugt werden.

**15.** Anordnung nach einem der Ansprüche 12 bis 14, **dadurch gekennzeichnet, dass** mindestens ein Stromleiter (506) mindestens eine Schleife oder Wicklung um das ferromagnetische Element (551) bildet.

**16.** Anordnung nach einem der Ansprüche 5 bis 15, **dadurch gekennzeichnet, dass** die Einspeisung (110; 210; 610) an einem Rand des Teppichs (1a, 1b; 101; 201; 601) angeordnete Flachkontakte zur leitenden Kontaktierung der Stromleiter (6a, 6b; 106; 206; 606) umfasst.

**17.** Anordnung nach einem der Ansprüche 5 bis 16, weiter umfassend ein Leuchtelement (670), umfassend

a) eine Kopplungseinrichtung (675) zur Aufnahme von elektrischer Energie aus den Stromleitern (606) im Teppich (601), wenn die Kopplungseinrichtung (675) in einen Stromaufnahmebereich des Teppichs (601) gebracht wird;
b) eine mit der Kopplungseinrichtung (675) elektrisch verbundene elektronische Wandlereinheit (676) zum Erzeugen eines Nutzstroms aus der aufgenommenen elektrischen Energie;
c) eine mit der Wandlereinheit (676) elektrisch verbundene Lichtquelle (677), insbesondere eine LED.

**Claims**

**1.** Textile, woven carpet (1a, 1b; 101; 201) with longitudinally running warp threads (2, 3a, 3b, 4) and transversely running weft threads (5), three or more current conductors (6a, 6b; 106; 206) that are spaced apart and substantially parallel to one another being woven in either as warp threads or as weft threads, the current conductors being woven in such that they replace part of a filling warp, a binding warp or the weft threads during the weaving operation, **characterized in that** the warp threads comprise filling warps (2), binding warps (3, 3b) and pile warps (4), the current conductors (6a, 6b) being woven in as filling warps (2).

**2.** Carpet according to Claim 1, **characterized in that** each current conductor (6a, 6b; 106; 206) has a sheathing insulating layer.

**3.** Carpet according to Claim 1 or 2, **characterized in that** the current conductors (6a, 6b; 106; 206) are formed as metal stranded conductors, in particular copper stranded conductors.

4.  Carpet according to one of Claims 1 to 3, **characterized in that** the spacing between two neighbouring current conductors (6a, 6b; 106; 206) is 0.5 - 2 cm.

5.  Arrangement for supplying a load (677) with electrical energy from a power source, comprising

    a) a textile, woven carpet according to one of Claims 1 to 4;
    b) a feed (110; 210; 610) for the connection of the current conductors (6a, 6b; 106; 206; 606) to the power source; and
    c) a coupling device (130; 230, 240; 675, 676) for picking up electrical energy from the current conductors (6a, 6b; 106; 206; 606) in the carpet (1a, 1b; 101; 201; 601) and transporting it further to the load (677) when the coupling device (130; 230, 240; 675, 676) is brought into a power pick-up area of the carpet (1a, 1b; 101; 201; 601).

6.  Arrangement according to Claim 5, **characterized in that** the coupling device (130; 230, 240) is formed in such a way that electrical energy can be inductively picked up from the current conductors (6a, 6b; 106; 206).

7.  Arrangement according to Claim 6, **characterized in that** the three or more current conductors (6a, 6b; 106; 206; 606) form a first group, via which electrical energy is transmitted in a first direction, and a second group, via which electrical energy is transmitted in a second direction, opposite to the first direction, each group producing a magnetic field which determines the power pick-up area of the carpet (1a, 1b; 101; 201; 601).

8.  Arrangement according to Claim 7, **characterized in that** the first group and the second group respectively comprise two or more current conductors (6a, 6b; 106; 206; 606).

9.  Arrangement according to Claim 8, **characterized in that** in each case a number of current conductors (306; 406) of a group are electrically connected in parallel.

10. Arrangement according to Claim 9, **characterized in that** current conductors (406) of neighbouring groups (407.1... 407.4) are connected individually to one another, and **in that** a sequence of the current conductors (406) is changed over between the neighbouring groups (407.1...407.4) in such a way that a distance from at least one of the current conductors (406) to a nearest outermost current conductor (406) of the respective group (407.1...407.4) varies between a first of the neighbouring groups (407.1... 407.4) and a second of the neighbouring groups (407.1...407.4).

11. Arrangement according to Claim 6, **characterized in that** the three or more current conductors (6a, 6b; 106; 206; 606) form a first group, via which electrical energy is transmitted in a first direction, and a second group, via which electrical energy is transmitted in a second direction, opposite to the first direction, neighbouring current conductors (6a, 6b; 106; 206; 606) respectively belonging alternately to the first group and the second group.

12. Arrangement according to Claim 6 or 11, **characterized in that** the feed is formed in such a way that, on connection of the current conductors (506) to the power source, a magnetic field distribution with at least one localized maximum is created in the area of the connected current conductors (506), while the magnetic field is small in the remaining regions of this area, whereas the carpet is provided with an element (551) made of ferromagnetic material at the at least one localized maximum of the magnetic field distribution.

13. Arrangement according to Claim 12, **characterized in that** the element (551) made of ferromagnetic material is woven in between the current conductors (506) and extends in the transverse direction over a number of neighbouring current conductors (506).

14. Arrangement according to Claim 13, **characterized in that** a number of spaced-apart elements (551) made of ferromagnetic material are arranged and **in that** a number of localized maxima are created.

15. Arrangement according to one of Claims 12 to 14, **characterized in that** at least one current conductor (506) forms at least one loop or winding around the ferromagnetic element (551).

16. Arrangement according to one of Claims 5 to 15, **characterized in that** the feed (110; 210; 610) comprises flat contacts arranged at an edge of the carpet (1a, 1b; 101; 201; 601) for contacting the current conductors (6a, 6b; 106; 206; 606) in a conducting manner.

17. Arrangement according to one of Claims 5 to 16 **characterized by** a lighting element (670), comprising

a) a coupling device (675) for picking up electrical energy from the current conductors (606) in the carpet (601) when the coupling device (675) is brought into a power pick-up area of the carpet (601);

b) an electronic transducer unit (676), electrically connected to the coupling device (675), for producing a useful current from the electrical energy picked up;

c) a light source (677), in particular an LED, electrically connected to the transducer unit (676).

**Revendications**

1. Tapis textile tissée (1a, 1b; 101; 201) à fils de chaîne (2, 3a, ..., 3e, 4) s'étendant longitudinalement et fils de trame (5) s'étendant transversalement, trois ou plusieurs conducteurs de courant (6a, 6b; 106; 206) situés à distance les uns des autres et essentiellement parallèlement les uns aux autres étant tissés comme fils de chaîne ou comme fils de trame, les conducteurs de courant sont tissés de telle sorte que pendant l'opération de tissage, ils remplacent une partie d'une chaîne de remplissage, d'une chaîne de liaison ou des fils de trame, **caractérisé en ce que** les fils de chaîne comprennent des fils de chaîne de remplissage (2), des fils de chaîne de liaison (3, 3b) et des fils de chaîne de poils (4), les conducteurs de courant (6a, 6b) étant tissés comme fils de chaîne de remplissage (2).

2. Tapis selon la revendication 1, **caractérisé en ce que** chaque conducteur de courant (6a, 6b; 106; 206) est enveloppé dans une couche d'isolation.

3. Tapis selon la revendication 1 ou 2, **caractérisé en ce que** les conducteurs de courant (6a, 6b; 106; 206) sont configurés comme lisses métalliques et en particulier lisses en cuivre.

4. Système selon l'une des revendications 1 à 3, **caractérisé en ce que** la distance entre deux conducteurs de courant (6a, 6b; 106; 206) voisins est de 0,5 â 2 cm.

5. Système pour délivrer à un consommateur (677) de l'énergie électrique provenant d'une source de courant, comprenant :

a) un tapis selon l'une des revendications 1 à 4;

b) une alimentation (110; 210; 610) destinée à raccorder les conducteurs de courant (6a, 6b; 106; 206; 606) à la source de courant et

c) un dispositif de couplage (130; 230, 240; 675, 676) qui reçoit l'énergie électrique des conducteurs de courant (6a, 6b; 106; 206; 606) placés dans le tapis (1a, 1b; 101; 201; 601) et qui la transporte vers le consommateur (677) lorsque le dispositif de couplage (130; 230, 240; 675, 676) est placé dans une zone de prélèvement de courant du tapis (1a, 1b; 101; 201; 601).

6. Système selon la revendication 5, **caractérisé en ce que** le dispositif de couplage (130; 230, 240) est configuré de manière à pouvoir recevoir inductivement l'énergie électrique des conducteurs du courant (6a, 6b; 106; 206).

7. Système selon la revendication 6, **caractérisé en ce que** les trois ou plusieurs conducteurs de courant (6a, 6b; 106; 206; 606) forment un premier groupe par lequel de l'énergie électrique est transférée dans une première direction ainsi qu'un deuxième groupe par lequel de l'énergie électrique est transmise dans une deuxième direction opposée à la première direction, chaque groupe créant un champ magnétique qui définit la zone de prélèvement de courant du tapis (1a, 1b; 101; 201; 601).

8. Système selon la revendication 7, **caractérisé en ce que** le premier groupe et le deuxième groupe comprennent tous deux deux ou plusieurs conducteurs de courant (6a, 6b; 106; 206; 606).

9. Système selon la revendication 8, **caractérisé en ce que** plusieurs conducteurs de courant (306; 406) d'un groupe sont raccordés électriquement en parallèle.

10. Système selon la revendication 9, **caractérisé en ce que** des conducteurs de courant (406) de groupes (407.1, , ..., , 407.4) voisins sont reliés séparément les uns aux autres et **en ce que** la succession de conducteurs de courant (406) dans les groupes (407.1, .. , 407.4) voisins est modifiée de telle sorte que la distance entre au moins l'un des conducteurs de courant (406) et le conducteur de courant extérieur voisin (406) des groupes (407.1, ..., 407.4) est différente dans un premier des groupes (407.1, ..., 407.4) voisins et dans un deuxième des groupes (407.1, ..., 407.4) voisins.

**11.** Système selon la revendication 6, **caractérisé en ce que** les trois ou plusieurs conducteurs de courant (6a, 6b; 106; 206; 606) forment un premier groupe par lequel l'énergie électrique est transmise dans une première direction ainsi qu'un deuxième groupe par lequel l'énergie électrique est transmise dans une deuxième direction opposée à la première direction, des conducteurs de courant (6a, 6b; 106; 206; 606) voisins faisant partie en alternance du premier et du deuxième groupe.

**12.** Système selon la revendication 6 ou 11, **caractérisé en ce que** l'alimentation est configurée de telle sorte que lorsque les conducteurs de courant (506) sont raccordés à la source de courant, une répartition du champ magnétique qui présente au moins un maximum local est formée dans la zone occupée par les conducteurs de courant (506) raccordés, le champ magnétique étant faible dans d'autres parties de cette zone, le tapis étant dotée d'un élément (551) en matériau ferromagnétique à l'endroit du ou des maximums localisés de la répartition du champ magnétique.

**13.** Système selon la revendication 12, **caractérisé en ce que** l'élément (551) en matériau ferromagnétique est tissé entre les conducteurs de courant (506) et s'étend transversalement au-dessus de plusieurs conducteurs de courant (506) voisins.

**14.** Système selon la revendication 13, **caractérisé en ce que** plusieurs éléments (551) en matériau ferromagnétique sont disposés à distance les uns des autres et **en ce que** plusieurs maximums locaux sont formés.

**15.** Système selon l'une des revendications 12 à 14, **caractérisé en ce qu'**au moins un conducteur de courant (506) forme au moins une boucle ou un enroulement autour de l'élément ferromagnétique (551).

**16.** Système selon l'une des revendications 5 à 15, **caractérisé en ce que** l'alimentation (110; 210; 610) prévue sur un bord du tapis (1a, 1b; 101; 201; 601) comprend des contacts plats qui permettent d'établir un contact conducteur avec les conducteurs de courant (6a, 6b; 106; 206; 606).

**17.** Système selon l'une des revendications 5 à 16, **caractérisé par** un élément d'éclairage (670) qui comprend :

a) un dispositif de couplage (675) qui permet de prélever de l'énergie électrique sur les conducteurs de courant (606) du tapis (601) lorsque le dispositif de couplage (675) est amené dans une zone de prélèvement d'énergie du tapis (601),
b) une unité électronique de conversion (676) reliée électriquement au dispositif de couplage (675) pour délivrer un courant utilisable à partir de l'énergie électrique reçue et
c) une source de lumière (677), en particulier une LED, reliée électriquement à l'unité de conversion (676).

**Fig. 1A**

**Fig. 1B**

**Fig. 1C**

**Fig. 1D**

**Fig. 1E**

**Fig. 2A**

**Fig. 2B**

**Fig. 3**

**Fig. 4**

**Fig. 5A**

307.1  306  307.4

307.2  307.3

**Fig. 5B**

**Fig. 6A**

407.1  407.4

406

406.1

407.2  407.3

**Fig. 6B**

**Fig. 7**

408.3

408.1  408.2  406

**Fig. 10A**

550.1

551

551a

551b

506

**Fig. 10B**

560.1

506   551

**Fig. 11A**

550.2

551

551a

551b

506

560.2

**Fig. 11B**

551

506

**Fig. 12**

550.3

551

506

**Fig. 8**

550   506

551

**Fig. 9**

**Fig. 13**

35
30
25
20
15
10
5
0

0   100   200   300   400   500   600

**Fig. 14A**

601    650    606    610

670
671    676    673    677    673a    650

674    606    675    672    601

**Fig. 14B**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9602970 A
- JP 54111693 B
- JP 10005104 A

- WO 2004009399 A
- WO 2004009400 A